# EUROPÄISCHE PATENTSCHRIFT

(11) **EP 1 273 842 B1**
(45) Veröffentlichungstag und Bekanntmachung des Hinweises auf die Patenterteilung: **02.08.2006**
(21) Anmeldenummer: 02012219.8
(22) Anmeldetag: 04.06.2002
(51) Int. Cl.: F16L 23/08, F16L 21/06, F16L 21/08

(54) **Profilschelle und Muffenverbindung mit einer solchen Profilschelle**
Profile clamp and sleeve joint with such a profile clamp
Collier à profil et raccord à manchon avec un tel collier à profil

(30) Priorität: 05.07.2001 DE 10132631
(43) Veröffentlichungstag der Anmeldung: 08.01.2003
(73) Patentinhaber: Rasmussen GmbH, 63477 Maintal (DE)
(72) Erfinder: Barbett, Wolfgang, 46414 Rhede (DE); Heise, Rainer, 37308 Siemerode (DE); Krämer, Markus, 63533 Mainhausen (DE); Krüger, Manfred, 63654 Büdingen (DE)
(74) Vertreter: Knoblauch, Andreas

(56) Entgegenhaltungen:
- EP-A- 0 928 921
- EP-A- 0 931 966
- DE-A- 10 051 814
- DE-U- 1 931 751
- US-A- 4 468 057

## Beschreibung

Die Erfindung bezieht sich auf eine Profilschelle mit einem gelenkigen, im Querschnitt etwa trapezförmigen Schellenband und einem Spannverschluß zum Verbinden zweier Rohre oder dergleichen, und auf eine Muffenverbindung mit einer solchen Profilschelle.

Solche Profilschellen werden zum Verbinden von Rohren verwendet, die an ihren Enden mit Flanschen versehen sind, vgl. beispielsweise DE 198 00 283 C1. Sie können aber auch zum Verbinden anderer Bauteile, z.B. Behälter und Behälterdeckel, verwendet werden, die an ihren Enden mit Flanschen versehen sind.

Ferner sind Rohrschellen bekannt, die zum Verbinden glatter Rohre mit gleichem Durchmesser verwendet werden und innen mit aus einem Metallband geformten konischen offenen Ringen versehen sind, die schräg zueinander hin geneigt sind und mit ihrem radial äußeren Rand an der Innenseite des Übergangs von einem axialen Querteil zu jeweils einer radialen Seitenwand des Schellenbandes anliegen, dagegen mit ihrem radial inneren, mit Zähnen oder Krallen versehenen Rand in das Rohrmaterial eingreifen. Ein Beispiel einer solchen Rohrkupplung ist in der DE 198 02 676 C1 dargestellt.

Bei Muffenverbindungen von Rohren, bei denen ein Endabschnitt des einen Rohres aufgeweitet und ein Endabschnitt des anderen Rohres glatt ist, so daß der glatte in den aufgeweiteten Endabschnitt eingeführt werden kann, wobei eine Dichtung zwischen den beiden Endabschnitten angeordnet wird, werden solche Profilschellen mangels Flanschen an den Rohren und auch solche Rohrkupplungen wegen der unterschiedlichen Durchmesser der Endabschnitte nicht angewandt.

Dem Stand der Technik gehört auch die EP 931 966 an. Dieses Dokument offenbart eine Muffenverbindung, wobei zwei gleiche glate Rohre von zwei mit Zähnen versehenen konischen Ringen in einem Schellenband gehalten sind.

Der Erfindung liegt die Aufgabe zugrunde, eine Profilschelle der eingangs genannten Art anzugeben, die ohne wesentlichen Mehraufwand auch bei Muffenverbindungen angewandt werden kann und dennoch eine zuverlässige Verbindung sicherstellt. Desgleichen soll eine einfache Muffenverbindung mit einer solchen Profilschelle angegeben werden.

Die erfindungsgemäße Muffenverbindung wird von dem Merkmalen des Anspruchs 1 definiert.

Bei dieser Ausbildung ergibt sich auf einfache Weise eine zuverlässige, hochbelastbare Muffenverbindung.

Vorzugsweise ist das Schellenband von einem Spannband umgeben, dessen Enden als Spannbacken des Spannverschlusses ausgebildet sind. Hierbei kann das Schellenband entsprechend steif und dickwandig ausgebildet sein, so daß es hohen Axialkräften der Rohre standhält, aber dennoch auf einfache Weise ein Verschluß angebracht werden kann, insbesondere ein leicht zu bedienender Gelenkverschluß.

Die Erfindung und ihre Weiterbildungen werden nachstehend anhand der beigefügten Zeichnung eines bevorzugten Ausführungsbeispiels näher beschrieben. Darin stellen dar:
- Fig. 1: einen Axialschnitt durch eine erfindungsgemäße Profilschelle und die mittels der Profilschelle ausgebildete Muffenverbindung und
- Fig. 2: eine Seitenansicht der erfindungsgemäßen Profilschelle und der Muffenverbindung.

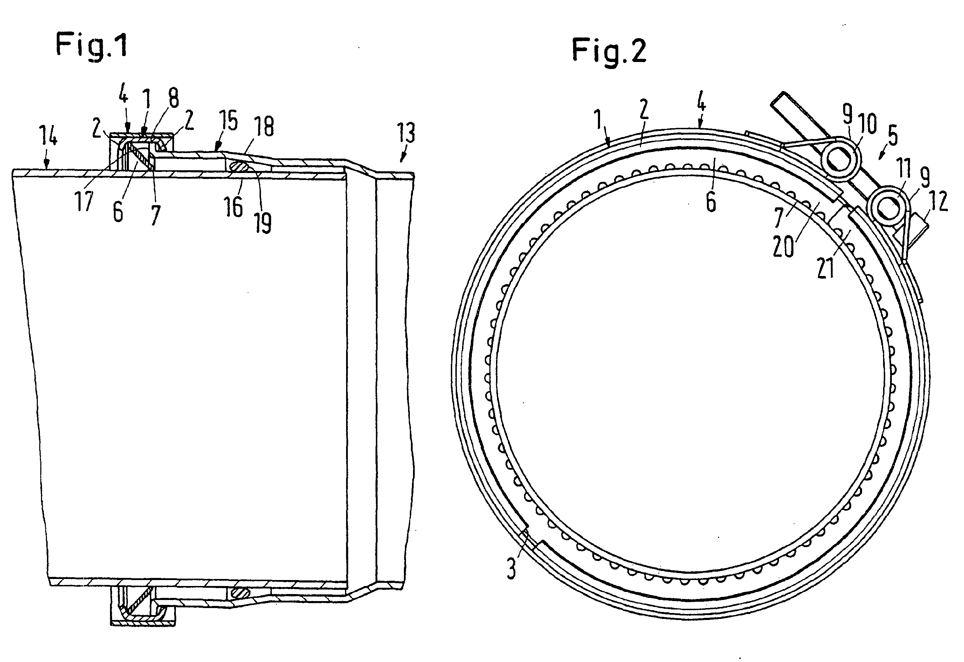

Nach den Fig. 1 und 2 besteht die Profilschelle aus einem im Querschnitt etwa trapezförmigen Schellenband 1, dessen Seitenwände 2 zur Erzielung einer Gelenkigkeit mit einer Unterbrechung 3 versehen sind, einem das Schellenband 1 umgebenden Spannband 4, einem mit dem Spannband 4 zusammenwirkenden Spannverschluß 5 in Form eines Gelenkverschlusses und einem Ring 6 aus einem Metallband, dessen radial innerer Rand mit Zähnen 7 versehen ist. Die freien Enden der Zähne 7 liegen auf einem Kreis, dessen Durchmesser kleiner als der Innendurchmesser der Seitenwände 2 des Schellenbandes 1 ist. Der radial äußere Rand des Ringes 6 liegt in einer Biegung zwischen einer der Seitenwände 2 und dem die Seitenwände 2 verbindenden Querteil 8 des Schellenbandes 1 an. Das Spannband 4 hat zu Spannbacken 9 in Form von Schlaufen zurückgebogene Endabschnitte, die am Spannband 4 befestigt, z.B. angeschweißt sind. In den schlaufenförmigen Spannbacken 9 sind hülsenförmige Gelenkteile 10 und 11 angeordnet, die von einer Spannschraube 12 durchsetzt sind. Zu diesem Zweck hat das Gelenkteil 10 eine Gewindebohrung und das Gelenkteil 11 eine gewindelose Bohrung. Ferner sind die Spannbacken 9 jeweils mit einem sich über den größten Teil des Umfangs des Gelenkteils 10 bzw. 11 erstreckenden und im radial äußeren Schenkel jeder Schlaufe die Spannschraube aufnehmenden Schlitz versehen.

Das eine Rohr 13 der zu verbindenden Rohre 13 und 14 hat einen aufgeweiteten Endabschnitt 15 und bildet ein sogenanntes "Muffenrohr". Das andere Rohr 14 hat einen glatten Endabschnitt 16. Der aufgeweitete Endabschnitt 15 des Rohres 13 hat an seinem Ende einen nach außen gerichteten, zwischen die Seitenwände 2 des Schellenbandes 1 greifenden Flansch 17, dessen Außendurchmesser größer als der Innendurchmesser der Seitenwände 2 des Schellenbandes und kleiner als der Innendurchmesser des Querteils 8 des Schellenbandes 1 ist. Ferner hat der aufgeweitete Endabschnitt 15 einen konischen Übergang 18 von einem kleineren zu einem größeren Durchmesser. Der Außendurchmesser des inneren glatten Endabschnitts 16 ist kleiner als der Innendurchmesser des aufgeweiteten Endabschnitts 15 des Rohres 13. Zwischen dem inneren Endabschnitt 16 und dem konischen Übergang 18 ist ein Dichtring 19 aus elastomerem Material angeordnet. Hinter dem freien Ende des inneren Endabschnitts 16 verjüngt sich das Rohr 13 auf den gleichen Durchmesser, den der Endabschnitt 16 des Rohres 14 aufweist.

Nachdem die geöffnete Profilschelle um den Flansch 17 des Rohres 13 herumgelegt und die Dichtung 19 bis zur Anlage an dem konischen Übergang 18 in das Rohr 13 eingeführt worden ist, wird der Endabschnitt 16 des Rohres 14 in den Endabschnitt 15 eingeführt. Anschließend wird die Profilschelle mittels des Spannverschlusses 15 gespannt. Dabei können sich die einander überlappenden, freien Endabschnitte 20, 21 des Ringes 6 im Sinne einer Vergrößerung der Überlappung in Umfangsrichtung relativ zueinander verschieben. Gleichzeitig wird der Ring 6 etwas radial zusammengedrückt, so daß sein innerer, mit den Zähnen 7 versehener Rand bestrebt ist, sich in Richtung zum äußeren Rohr 13 hin und geringfügig in dieses zu verschieben. Dabei nimmt er das Rohr 14 in der einen und ggf. auch das Rohr 13 in der anderen Richtung im Sinne einer weiteren Verschiebung des Rohres 14 in das Rohr 13 mit, so daß der Dichtring 19 noch etwas stärker verpreßt wird und sich seine Dichtwirkung erhöht. Bei steigendem Druck in den Rohren 13, 14 wären die Rohre 13, 14 bestrebt, sich auseinanderzubewegen. Dem wirken jedoch die in das Material des Endabschnitts 16 eingreifenden Zähne 7 des Rings 6 und auch die Tatsache entgegen, daß der Ring 6 in diesem Falle bestrebt ist, sich radial aufzurichten, so daß die Zähne 7 um so fester in das Material des Endabschnitts 16 eingreifen. Desgleichen verhindert die den Flansch 17 übergreifende eine Seitenwand 2 des Schellenbands 1 eine Wegbewegung des Rohres 13 vom Rohr 14.

Das Rohr 13 braucht daher lediglich mit dem Flansch 17 und die übliche Profilschelle mit dem Ring 6 versehen zu werden, um die Muffenverbindung auszubilden. Dabei kann der Flansch 17 bei einem aus Metall hergestellten Rohr 13 einfach durch Umbördelung ausgebildet werden. Die herkömmliche Profilschelle bedarf selbst keiner weiteren Veränderung.

## Patentansprüche

1. Muffenverbindung mit einer Profilschelle und zwei zu verbindenden Rohren, wobei die Profilschelle ein gelenkiges Schellenband (1) mit einem Querschnitt in Form eines gleichschenkligen Trapezes ohne die längere der beiden parallelen Seiten eines Trapezes und einem Spannverschluß (5) zum Verbinden der Rohre aufweist, wobei in dem Schellenband (1) ein konischer, mit einer Unterbrechung versehener Ring (6) aus einem Metallband angeordnet ist, dessen radial innerer Rand Zähne (7) aufweist, deren freie Enden auf einem Kreis liegen, dessen Durchmesser kleiner als der Innendurchmesser der Seitenwände (2) des Schellenbandes (1) ist, wobei der radial äußere Rand des Ringes (6) in einer Biegung zwischen einer der Seitenwände (2) und dem die Seitenwände (2) verbindenden Querteil (8) des Schellenbandes (1) anliegt, wobei das eine der zu verbindenden Rohre (13, 14) einen aufgeweiteten Endabschnitt (15) mit einem radial nach außen gerichteten, zwischen die Seitenwände (2) des Schellenbandes (1) greifenden Flansch (17) und einem konischen Übergang (18) von einem kleineren zu einem größeren Durchmesser und das andere zu verbindende Rohr einen glatten, in den aufgeweiteten Endabschnitt (15) eingeführten Endabschnitt (16) aufweist, dessen Außendurchmesser kleiner als der Innendurchmesser des aufgeweiteten Endabschnitts des einen Rohres ist, wobei der Außendurchmesser des Flansches (17) größer als der Innendurchmesser der Seitenwände (2) und kleiner als der Innendurchmesser des Querteils (8) des Schellenbandes (1) ist und zwischen dem inneren Endabschnitt (16) und dem konischen Übergang (18) der zusammengesteckten Endabschnitte (15, 16) ein Dichtring (19) angeordnet ist, und wobei die Zähne (7) des Ringes (6) im gespannten Zustand des Schellenbandes (1) in die Außenseite des anderen Rohres (14) eingreifen.

2. Muffenverbindung nach Anspruch 1, **dadurch gekennzeichnet, daß** das Schellenband (1) von einem Spannband (4) umgeben ist, dessen Enden als Spannbacken (9) des Spannverschlusses (5) ausgebildet sind.

3. Muffenverbindung nach Anspruch 1 oder 2, **dadurch gekennzeichnet, daß** der Spannverschluß ein Gelenkverschluß ist.

## Claims

1. Sleeve joint having a profiled clamp and two pipes to be connected, the profiled clamp comprising an articulated clamp strip (1) having a cross-section in the shape of an isosceles trapezoid without the longer one of the two parallel sides of a trapezoid and having a tensioning closure (5) for connecting the pipes; wherein a conical ring (6) provided with an interruption and made of a metal band is arranged in the clamp strip (1); wherein the radially inner edge of the conical ring (6) is provided with teeth (7), wherein the free ends of the teeth (7) are positioned on a circle having a diameter that is smaller than the inner diameter of the sidewalls (2) of the clamp strip (1); wherein the radially outer edge of the ring (6) engages a bent portion between one of the sidewalls (2) and the transverse part; wherein one of the pipes (13, 14) to be connected comprises a widened end section (15) with a radially outwardly oriented flange (17) engaging between the sidewalls (2) of the clamp strip (1) and has a conical transition (18) from a smaller to a larger diameter and the other pipe (14) to be connected has a smooth end section (16) inserted into the widened end section (15); wherein the outer diameter of the smooth end section (16) is smaller than the inner diameter of the widened end section (15) of said one pipe (13); wherein the outer diameter of the flange (17) is greater than the inner diameter of the sidewalls (2) and smaller than the inner diameter of the transverse part (8) of the clamp strip (1) and a sealing ring (19) is arranged between the smooth end section (16) and the conical transition (18) of the pipes (15, 16) plugged together; and wherein the teeth (7) of the ring (6) grip into the outer side of the other pipe (14) in the tensioned state of the clamp strip (1).

2. Sleeve joint according to claim 1, **characterised in that** a tensioning band (4) surrounding the clamp strip (1) is surrounded by a tensioning band (4) whose ends are formed as clamping jaws (9) of the tensioning closure (5).

3. Sleeve joint according to claim 1 or 2, **characterised in that** the tensioning closure (5) is an articulated closure.

## Revendications

1. Raccord à manchon avec un collier à profil et deux tubes à raccorder, le collier à profil présentant une bande de collier articulée (1) avec une section transversale en forme d'un trapèze équilatère sans le côté le plus grand des deux côtés parallèles d'un trapèze et une fermeture de serrage (5) pour raccorder les tubes, dans la bande de collier (1) étant disposé un anneau conique (6) en bande métallique muni d'une interruption, dont le bord radialement interne présente des dents (7) dont les extrémités libres reposent sur un cercle dont le diamètre est inférieur au diamètre interne des côtés latéraux (2) de la bande de collier (1), le bord radialement externe de l'anneau (6) reposant dans un cintrage entre l'un des côtés latéraux (2) et la partie transversale (8) reliant les côtés latéraux (2) de la bande de collier (1), l'un des tubes à raccorder (13, 14) présentant une section d'extrémité agrandie (15) avec une bride d'attaque (17) dirigée radialement vers l'extérieur entre les côtés latéraux (2) de la bande de collier (1) et une transition conique (18) allant d'un diamètre plus petit à un diamètre plus grand et l'autre tube à raccorder présentant une section d'extrémité (16) introduite dans la section d'extrémité (15) agrandie, dont le diamètre extérieur est plus petit que le diamètre intérieur de la section d'extrémité agrandie d'un tube, le diamètre extérieur de la bride (17) étant supérieur au diamètre intérieur des parois latérales (2) et inférieur au diamètre intérieur de la partie transversale (8) de la bande de collier (1) et, un anneau d'étanchéité (19) étant agencé entre la section d'extrémité interne (16) et la transition conique (18) des sections d'extrémité assemblées (15, 16), et les dents (7) de l'anneau (6), à l'état serré de la bande de collier (1) s'engageant dans le côté extérieur de l'autre tube (14).

2. Raccord à manchon selon la revendication 1, **caractérisé en ce que** la bande de collier (1) est entourée d'une bande de serrage (4) dont les extrémités sont formées en tant que mâchoires de serrage (9) de la fermeture de serrage (5).

3. Raccord à manchon selon la revendication 1 ou 2, **caractérisé en ce que** la fermeture de serrage est une fermeture articulée.
